Europäisches Patentamt

(19) European Patent Office

Office européen des brevets

(11) Publication number: **0 064 123**
**A2**

# (12) EUROPEAN PATENT APPLICATION

(21) Application number: **81830165.7**

(22) Date of filing: **17.09.81**

(51) Int. Cl.³: **B 07 B 9/00**
**B 03 B 9/06**

(30) Priority: **23.04.81 IT 8336581**

(43) Date of publication of application:
**10.11.82 Bulletin 82/45**

(84) Designated Contracting States:
**AT BE CH DE FR GB LI LU NL SE**

(71) Applicant: **DANECO-DANIELI ECOLOGIA Spa**
**Via Beltrame, 28**
**I-33042 Buttrio (UD)(IT)**

(72) Inventor: **Babos, Luciano**
**Via Doberdò, 26**
**I-34100 Trieste(IT)**

(72) Inventor: **Martegani, Antonio Dario**
**Via Ovidio, 4/3**
**I-34100 Trieste(IT)**

(74) Representative: **Petraz, Gilberto**
**G.L.P. S.a.s. di Gilberto Petraz P.le Cavedalis 6 2**
**I-33100 Udine(IT)**

(54) Aeroballistic device for separating the components of pretreated solid urban waste.

(57) The invention concerns an aeroballistic device for separating the components of pre-treated solid urban waste, whereby said device consists of a container having at its bottom a plurality of gathering hoppers and comprises in mutual cooperation and coordination:
- throwing head means (12),
- fan means (20) cooperating with said throwing head means (12) by means of an opposing current of air, and
- separator means (22) located below (21) said throwing head means (12),
whereby adjustable screen means (25) are advantageously included and there are means for re-circulation of air.

Classe Int n. B 02 c 19|06     rif. gip 0064123 3-2851

Description of the invention entitled:

"AEROBALLISTIC DEVICE FOR SEPARATING THE COMPONENTS OF PRE-TREATED SOLID URBAN WASTE"

in the name of DANECO - Danieli Ecologia S.p.A. at Buttrio.

submitted on        under No.

---

This invention concerns an aeroballistic device for separating the hard components of pre-treated solid urban waste. To be more exact, the invention concerns an aeroballistic device for separating the hard components of pre-treated solid urban waste and deals in particular with the separation of glass, hard bodies, tin plate, cans and similar and like objects and materials.

When dealing with waste, and in particular with solid urban waste, after the pre-treatment and separation of ferrous materials it is of fundamental importance to be able to separate the organ component from other materials deemed to be pollutants of said component.

In particular, the materials deemed to be pollutants of the organic component are, for instance:

- glass and hard bodies in general (chinaware, pottery, stones, and so on);

- non-ferrous tin plate and cans.

The device of the invention provides for a vibrating

*Gilberto Petraz*

feeder means which arranges to feed the material evenly onto throwing head means.

The material to be divided into the various components consists of organic matter and other heavy or magnetic bodies in the waste.

Said material to be divided is thrown into a chamber having a bottom consisting of hoppers to gather the various materials sorted.

On the wall substantially opposite to that from which the material is thrown, fan means are advantageously located which blow a jet of air in the opposite direction to that of the motion of the material thrown.

The air blown inside the chamber can be re-aspirated by said fan means, from the zone lying below the intake of the material, through separator means.

In this way it is possible to avoid the escape of the processing air outside the machine and the formation of polluting or smelly fluid currents in the surroundings.

The material thrown has a given energy proportional to its mass and to the square of the throwing speed, and this energy is partly dissipated by the drag of an aerodynamic nature which the material undergoes.

Aerodynamic drag is increased by the presence of the jet of air blown in the opposite direction.

Owing to their differing ratios of the product of the coefficient of aerodynamic drag multiplied by resistant section versus their mass, the various materials drop into the throwing chamber at various distances from the throwing point. It is possible in this way to separate them.

Indeed, the organic matter which has a high ratio of the product of the coefficient of aerodynamic drag multiplied by resistant section versus its mass, drops into the zone nearest to the throwing head, whereas glass and hard

Gilberto Petraz

bodies have a longer trajectory.

Thus it is possible to gather in the hoppers, besides a modest quantity of pollutants, the following components: organic matter: non-ferrous cans and tin plate: glass and the like hard bodies.

Furthermore, it is possible to gather in a separator any dusty material or material with a very low ratio of the product of the coefficient of aerodynamic drag multiplied by resistant section versus mass.

The device of the invention enables the following advantages to be obtained:

- separation of the various components of the material arriving on the basis of their mass and the product of the coefficient of aerodynamic drag multiplied by resistant section;

- minimization of the energy required for the separation as compared to other systems such as air classifiers;

- the ability to separate a differentiated range of homogeneous materials by interposing several interception screens;

- by using a jet of air blown in the opposite direction to that of the motion of the material thrown, to make the overall whole of the device much more compact than a simple throwing-type classifier.

The invention is therefore embodied in an aeroballistic device for separating the components of pre-treated solid urban waste, whereby said device consists of a container having at its bottom a plurality of gathering hoppers and is characterized by comprising in mutual cooperation and coordination:

- throwing head means,

- fan means cooperating with said throwing head means by blowing a current of air towards them and

- separator means lying below said throwing head means,

*Gilberto Petraz*

whereby adjustable screen means are advantageously included and there are also means for recirculation of air.

Hereinafter we shall describe a preferential embodiment of the invention as a non-restrictive example, at the same time making references to the attached table, which gives a side view of the device.

The device of the invention consists of a vibrating feeder means IO which arranges to dose the material II evenly onto the throwing head means I2.

Said throwing head means I2 consist essentially, in this instance, of a high-speed conveyor belt I3 provided with ridges I4 or incorporated scoops for conveying and throwing the material II.

The slope of the throwing head means I2 can be unchangeable or variable, that is to say, the tangent angle of the throw can be fixed or variable.

The material II to be separated into the various components includes organic matter and other heavy or magnetic bodies normally to be found in waste.

The material II is hurled into a chamber I5 with side walls I6 parallel to or inclined in relation to each other and with a bottom consisting of hoppers I7 to gather the various components sorted.

On the wall I8 opposite to that from which the material is thrown I9 there are positioned fan means 20 which serve to send a jet of air in the opposite direction to that of the motion of the material thrown.

The air thus blown inside the chamber I5 is re-aspirated advantageously by the same fan means 20 from the zone 2I below the intake of the material II.

The aspiration takes place advatageously through cyclone-type separator means 22 or an equivalent type.

The outlet 23 of the separator means 22 is connected

*Gilberto Petraz*

in this case to the aspiration 24 of the fan means 20 with suitable ducts.

Means for replacing any air lost can be envisaged. In this way any appreciable escape of processing air out of the device with the formation, in the neighbourhood, of fluid currents that might be toxic or smelly is prevented.

The material thrown II possesses a given energy which, as said earlier, is in proportion to its mass and to the square of the throwing speed; said inertial energy is dis-sipated partly by the aerodynamic drag which the material undergoes and partly by the presence of said opposing jet of air blown by the fan means 20.

Owing to their varying ratios the various components III-2II-3II-4II fall into the throwing chamber at various distances from the throwing point itself, and their separat-ion is made possible for this reason.

Organic material III which has a high ratio of the product of the coefficient of drag multiplied by resistant section versus mass falls into the zone nearest to the throwing head means I2, whereas glass and hard bodies 2II-3II have a longer trajectory.

Dusty material 4II or material having a very low ratio is, instead, gathered by the separator means 22.

By means of the hoppers I7 and of the screens 25, which are advantageously adjustable, it is possible to gather the following components besides a small quantity of pollutants:
- organic matter III in the hopper I7,
- non-ferrous cans and tin plate 2II in the hopper II7,
- glass and like hard bodies 3II in the hopper 2I7,
- dusty material 4II separated in the separator means 22 and collected at 3I7.

We have described here a device according to the invention, but variants are possible. Thus, it is possible to vary the proportions and sizes, and parts can be added or removed; it is possible to replace the axial fan with a centrifugal fan; it is possible to envisage the throwing head means I2 as having an adjustable speed; the fan means 20 can be envisaged as having a range and/or capacity which can be varied and regulated as wished; it is possible to slope the jet of air of the fan means as required; the throwing head means I2 can also consist of wheels with scoops or can be of a windmill type or can consist of other like or equivalent means, and so on.

These and other variants are all possible for a technician in this field within the scope of the idea of the solution.

Gilberto Petraz

rif. slp 3-285I

0064123

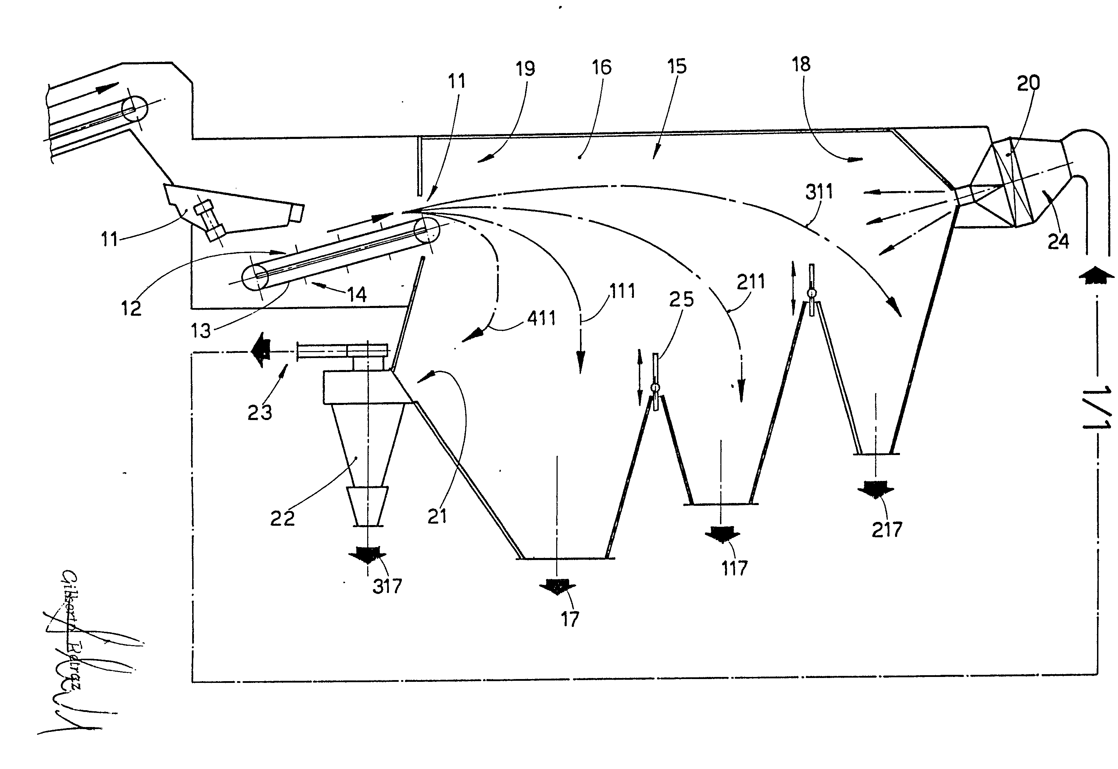

## CLAIMS

I. Aeroballistic device for separating the components of pre-treated solid urban waste, consisting of a container having at its bottom a plurality of gathering hoppers and characterized by comprising in mutual cooperation and coordination:

- throwing head means (I2),
- fan means (20) cooperating with said throwing head means (I2) by blowing a current of air in the opposite direction to that of the motion of the material thrown, and
- separator means (22) located (2I) below said throwing head means (I2),

whereby adjustable screen means (25) are advantageously comprised and there are means for re-circulation of air.

2. Aeroballistic device for separating the components of pre-treated solid urban waste, as in Claim I, characterized by the fact that the throwing head means (I2) comprise a plurality of ridges or scoops (I4) moving at a high speed, which can advantageously be regulated, whereby the tangent angle of throwing the materials (II) can advantageously be adjusted.

3. Aeroballistic device for separating the components of pre-treated solid urban waste, as in Claims I and 2, characterized by the fact that the throwing head means (I2) consist of a conveyor belt (I3).

4. Aeroballistic device for separating the components of pre-treated solid urban waste, as in Claims I and 2, characterized by the fact that the throwing head means (I2) consist of wheel means or windmill means.

5. Aeroballistic device for separating the components of pre-treated solid urban waste, as in Claim I and in one or another of the Claims thereafter, characterized by the

Gilberto Petraz

fact that on the wall (I8) opposite to the wall (I9) where throwing takes place there are located fan means (20) blowing air in the opposite direction to that of the motion of the material (II) thrown by the throwing head means (I2).

6. Aeroballistic device for separating the components of pre-treated solid urban waste, as in Claim I and in one or another of the Claims thereafter, characterized by the fact that the fan means (20) have an axis of blown air which can be adjusted by angles as desired.

7. Aeroballistic device for separating the components of pre-treated solid urban waste, as in Claim I and in one or another of the Claims thereafter, characterized by the fact that the aspiration (24) of the fan means (20) is connected at least partially to the outlet (23) of the separator means (22).

8. Aeroballistic device for separating the components of pre-treated solid urban waste, as in Claim I and in one or another of the Claims thereafter, characterized by the fact that the separator means (22) are located in a position below (2I) the throwing head means (I2).

9. Aeroballistic device for separating the components of pre-treated solid urban waste, as in Claim I and in one or another of the Claims thereafter, characterized by the fact that adjustable screen means (25) are located between one hopper (I7) and another (I7).

IO. Aeroballistic device for separating the components of pre-treated solid urban waste, as in Claim I and in one or another of the Claims thereafter, and as described and shown and for the purposes granted.

Gilberto Petraz

11    19    16    15    18    20

311

24

11

12

13    14

411    111    25    211

23

22    21    117    217

317    17

1/1

0064123